# EUROPEAN PATENT SPECIFICATION

(11) **EP 1 889 705 B1**
(45) Date of publication and mention of the grant of the patent: **08.04.2009**
(21) Application number: 06425591.2
(22) Date of filing: 18.08.2006
(51) Int. Cl.: B29C 43/30, B29D 31/00, B44C 1/24

(54) **A method for producing graphical signs on covering materials, such as floorings, and related covering material**
Verfahren zum Erzeugen von grafischen Zeichen auf Bedeckungsmaterialien wie Bodenbeläge und ähnliche Materialien
Procédé pour la réalisation de signes graphiques sur des matériaux de revêtement comme revêtements de sol et matériaux similaires

(43) Date of publication of application: 20.02.2008
(73) Proprietor: Mondo S.p.A., 12051 Alba Frazione Gallo (CN) (IT)
(72) Inventor: Stroppiana, Fernando, 12060 Grinzane Cavour (Cuneo) (IT)
(74) Representative: Bosotti, Luciano

(56) References cited:
- EP-A2- 0 668 138
- EP-A2- 0 747 241
- GB-A- 321 173

## Description

The present invention relates to techniques for producing graphic signs on covering materials, such as, for example, floorings.

Covering materials constitute a sector of the art that is particularly rich in proposals and solutions that are alternative to one another. This applies, in particular, to the sector of floorings and more especially floorings with a base of artificial and synthetic resins (e.g., PVC), rubber and linoleum.

For these covering materials there is particularly felt the need for providing, on the exposed surface of the covering (for example, on the treading surface of a flooring) graphic signs, such as decorations, wordings, signs or markings, etc.

There is in general known, for all these materials, the possibility of forming decorative patterns of a substantially uniform type, i.e., which do not give rise to a differentiated appearance in different areas of the flooring. This applies, of course, also to coverings, bestowed on which, with different techniques, is an as a whole "marbled" appearance resulting from the presence, within the covering, of adjacent areoles with different colours (possibly with a striped pattern), and again to coverings comprising a background on which granules of a particulate material are "seeded", which have a colouring that contrasts with the background (see, in this connection, the solutions described in documents such as EP-A-0 668 138, EP-A-0 693 388 or EP-A-1 020 282).

In all these solutions according to the prior art, albeit in the presence of adjacent areoles with contrasting colouring, the covering has an as a whole uniform appearance.

In order to produce graphic signs, such as for example, wordings or markings or signs (arrows indicating preferential lanes, lines for waiting, etc.), a solution up to now extensively adopted in the case of coverings of this sort has been that of resorting to inlaying portions with different colourings. Albeit frequently enabling good results to be achieved, this solution presents a considerable degree of complexity, as well as being burdensome to implement.

In order to produce graphic signs on coverings such as floorings of the type previously described, it is of course possible to resort to printing techniques. Whilst various types of commonly used plastic material are suited with relative ease to being printed in a durable way (for immediate reference, the type of PVC commonly used for the production of footballs and balls for playing with in general), the same does not apply to the materials used for making coverings (including PVC for floorings) and, in particular, rubber-based materials or linoleum.

These materials are far from suited to being printed. In the case of rubber, printing should be carried out preferably prior to vulcanizing, and the pressures and temperatures typical of the vulcanizing step end up having a deleterious effect on any ink printing. In the case of linoleum, it is practically imperative to carry out the printing prior to curing, namely, when the granular components of the structure of the linoleum (wood flour and/or cork, mineral fillers, etc.) are still extensively soaked in linseed oil, in conditions in which it is practically impossible to obtain a regular and continuous adhesion of a layer of ink.

Once again it should be considered that, in any case, conventional ink printing tends to form a rather thin layer on the covering material. Even when the covering is provided with a protective coating layer with scratch-resistant function, it is quite common to find (even in situations of not particularly heavy use) that the layer of scratch-resistant material can rapidly undergo nicking and abrasion, with the consequent risk of removal of the underlying decorative pattern printed thereon. This consideration applies all the more in the case where the printed decorative pattern emerges on the surface of the covering, without layers of coating.

Document EP-A- 0 747 241 discloses a method where a depressed or displaced pattern image is created on a base layer of color particles. Accent particles or pellets are then sprinkled or applied over the embossed base layer to consolidate the accent and color particles to form a preformed mass which is then pressed to form a fused textured structure.

There then exists the need to provide techniques for the production of covering materials that will not give rise to the drawbacks outlined previously.

The object of the present invention is to provide an answer to said needs.

According to the present invention, this object is achieved thanks to a method having the characteristics referred to specifically in claim. The invention also relates to the corresponding product.

The claims form an integral part of the technical disclosure provided herein in regard to the invention.

Essentially, the solution described herein is based upon the concept of producing the graphic sign by applying a particulate material that can be stably impressed selectively on the substrate of the covering.

The technique described herein hence refers to the solutions described in the various patent documents cited previously, which envisage "seeding" of the substrate with a particulate material. In the case of some of these documents according to the known art, the particulate material is applied in a non-selective way, i.e., in a basically uniform way over the entire surface of the covering. Instead, in the case of the technique described herein, the particulate material is applied in a selective way, i.e., in a non-uniform way over the surface of the covering, and it is precisely the absence of said uniformity that provides the graphic sign on the covering.

A currently particularly preferred embodiment envisages the use, as first step of the method, of a "seeding" of granular material of the type described in the aforesaid documents according to the known art. In a subsequent step, the granular material distributed or seeded in a substantially uniform way on the substrate, is subjected to an operation of impression (performed for example, with a roller with parts in relief) designed to cause, in the areas where it is intended to produce the graphic sign, the particulate material to be impressed in the substrate of the covering so as to be stably connected thereto. In the remaining parts of the surface of the substrate, the particulate material initially distributed in a substantially uniform way on the substrate is removed (for example, with an operation of suction), exploiting the fact that, where it has not been subjected to the operation of impression in the substrate, the aforesaid particulate material is not anchored to the substrate and can thus be removed, for example, by suction (or, in any case, with operations of blowing, brushing, etc.).

The invention will now be described purely by way of non-limiting example, with reference to the annexed plate of drawings, in which:
- Figure 1 is a general schematic view illustrating the various steps comprised in a method of the type described herein; and
- Figure 2 illustrates in detail the characteristics of the product obtained with the operating sequence schematically represented in Figure 1.

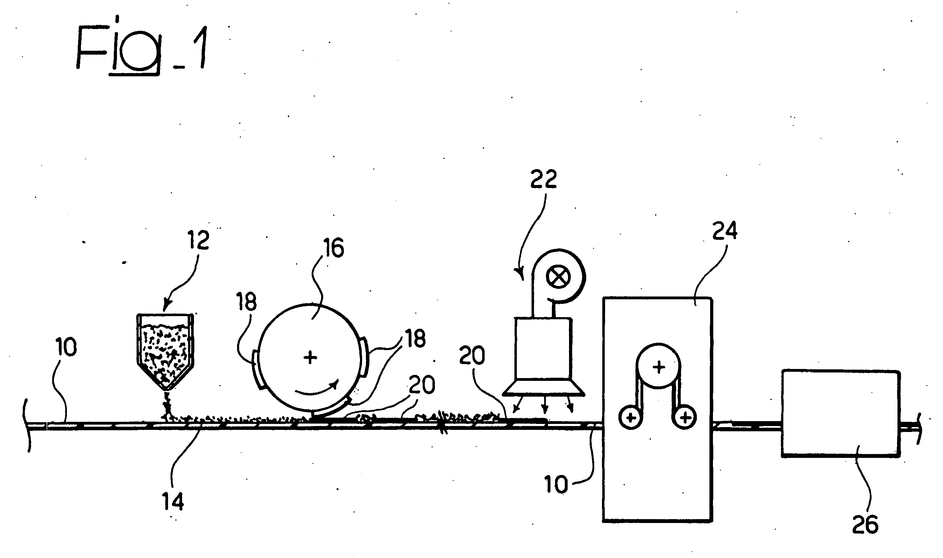

In Figure 1, the reference number 10 designates in general a web of material that can be used as substrate for a covering such as, for example, a flooring. Just to provide an example (without this, on the other hand, in any way limiting the scope of the invention), the web 10 can be constituted, for instance, by a material with a base of rubber not yet vulcanized. For example, the web of material 10 can be made of the same sheet material designated by the reference L in EP-B-0 968 804, owned by the owner of the present application.

In a station designated by 12, deposited ("seeded") on the web 10 is a layer of granular/particulate material 14, constituted typically by granules of materials made of rubber (either vulcanized or not) presenting a colouring that contrasts with the colouring of the substrate 10.

Techniques of "seeding" that lead to the formation of a uniform layer of particulate material 14 on a substrate 10 are widely known in the art as illustrated, for example, by EP-A-0 668 138, EP-A-0 693 388 and EP-A-1 020 282, already cited previously. In particular, there is known the possibility of regulating the process of seeding so as to render the seeded particulate layer more or less thinly spread, by varying the (average) distance between adjacent particles so as to make the particles stand out more or less against the background.

Downstream of the "seeding" station 12, the material 14 deposited on the substrate 10 preserves the characteristic of "free" material, i.e., material that is not connected to the substrate 10 except very weakly as a result of the intrinsic adhesiveness of the materials involved.

The reference number 16 designates a roller or cylinder that acts on the substrate 10 (and on the particulate layer 14 deposited thereon) according to modalities substantially similar to a roller or cylinder (or, more in general, "form") for printing, which presents portions in relief 18 that stand out with respect to the surface of skirt of the cylinder 16.

As a result of the co-operation with the surface of the substrate 10, the parts in relief 18 "impress" the particulate material 14 in the material of the substrate 10. Where the parts in relief 18 of the roller 16 act, the particulate material 14 is impressed, and hence fixed to the material of the substrate 10.

The operation of "impression" thus performed has, however, a selective, i.e., non-uniform, character, in the sense that the particulate material 14 is impressed (and hence fixed) in the material of the substrate 10 only in certain areas 20 that correspond to the areas in relief 18 of the cylinder 16.

In a subsequent suction (or blowing, or brushing, etc.) station, designated as a whole by 22, the material 14 deposited on the substrate 10 is partially sucked away (or in any case partially removed), exploiting the fact that - in areas different from the areas 20, i.e., where the parts in relief 18 of the cylinder 16 have not acted - the particulate material 14 continues to be deposited simply on the substrate 10 and can thus be easily removed therefrom in so far as it is not fixed to the substrate 10.

Downstream of the station 20, there is hence present a web of material comprising the substrate material 10 plus particles of the layer 14 impressed/fixed on the substrate 10 only in the areas 20 where the parts in relief 18 of the cylinder 16 have acted.

According to the normal principles of a printing process, the shaping of the parts in relief 18 is reproduced in a complementary way in the geometrical conformation of the areas 20 where the particulate material 14 is impressed in the material of the substrate 10.

Operating in this way, it is thus possible to form a wide range of graphic signs of different sorts: geometrical representations, wordings, "logos", figures, including ones of rather complex shape.

It will be appreciated that a sequence of i) deposition (station 12), ii) impression (station 16), and iii) removal (station 22) from the substrate 10 of the same type as the one represented schematically herein can be repeated a number of times one after another so as to impress on the substrate 10 graphic signs (in practice patterns) constituted by particulate materials of different colours.

For instance, envisaging one after another three operations of deposition/impression/removal, each implemented with particulate material 14 corresponding to one of the primary colours in a trichromatic system (for example, RGB), with possibly associated thereto a sequence of deposition/impression/removal of black or in any case dark grey particulate material 14, it is possible to form on the substrate 10 chromatic prints of a rather high quality (and in particular with high definition, in the case where the particulate material 14 is rather fine).

The substrate 10 that carries the desired graphic sign (possibly in the form of images, if so required colour images) impressed thereon is then sent on to a station 24, in which a particulate material 14 is stably and definitively anchored to the substrate 10.

For example, in the case where the layer 10 is made of rubber material to be vulcanized, the station 24 can consist of a station for application of heat and pressure that carries out vulcanizing of the material of the substrate 10 (and of the granular material 14, in the case where the substrate has not been vulcanized previously) so as to give rise to a covering such as a flooring with a base of vulcanized rubber.

This covering can then undergo the normal operations of finishing (polishing, painting, etc.), schematically represented by a single station designated by 26 normally adopted for coverings of this type. Since they are in fact steps of treatment of a type in itself known, any description thereof is altogether superfluous in the present context.

The sequence just described, which comprises the steps of non-selective distribution of the material 14 on the substrate 10, impression of the material 14 in the substrate 10 via the printing roller 16, and removal of the material not impressed in the station 22 constitutes the currently preferred embodiment of the invention. Persons skilled in the art will realize immediately, however, that the same final result can be achieved also according to different modalities.

For example, it is possible to envisage that the distribution of the granular material 14 on the surface of the substrate 10 occurs right from the start according to selective modalities, for example, to obtain the seeding through a mask or screen that reproduces in negative the graphic sign that it is desired to impress on the substrate 10. In this case, the seeding of the granular material 14 will lead the aforesaid material to deposit on the substrate 10 only in the areas of the mask that enable passage of the material 14 itself. In this case, the substrate 10 with the material 14 distributed selectively thereon according to the graphic sign to be represented, can be definitively sent on to the station 22 for performing "fixing" of the drawing.

It will be appreciated that the solution described previously with reference to Figure 1 in general enables a greater precision to be obtained in the application of the material 14 and hence a greater clarity of the graphic sign produced.

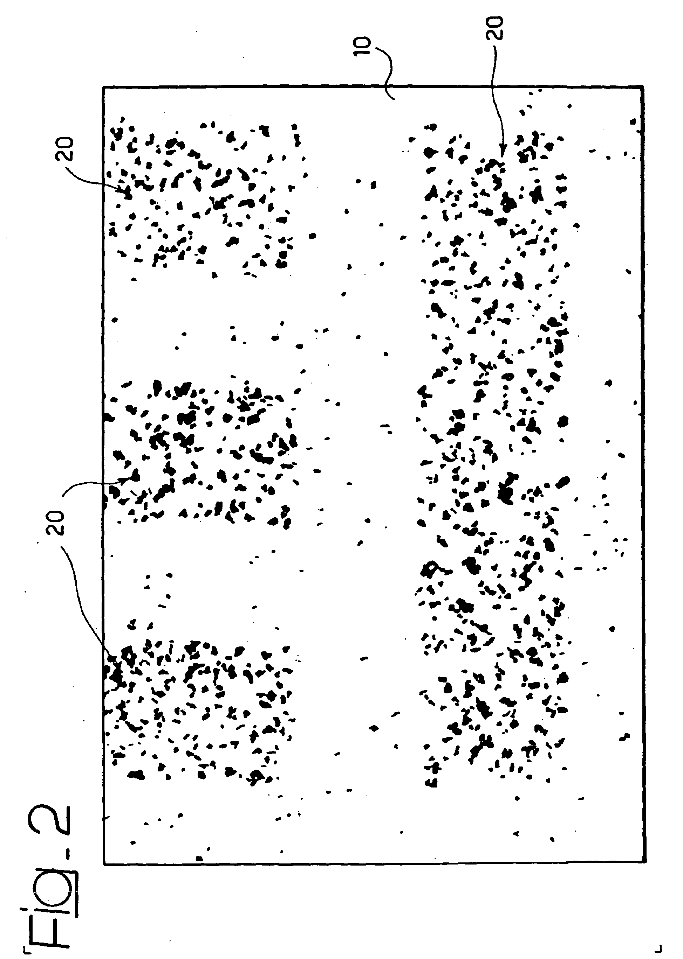

Figure 2 illustrates, in natural dimensions, the characteristics of a graphic sign made on a rubber-based flooring with the provision of a striped drawing (areas 20) to be used as markings or signs.

Of course, without prejudice to the principle of the invention, the details of construction and the embodiments may widely vary with respect to what is described and illustrated herein purely by way of example, without thereby departing from the scope of the present invention, as defined by the annexed claims.

## Claims

1. A method for producing graphic signs on a covering material, **characterized in that** it comprises the operations of:
- providing a substrate (10) of said covering;
- depositing on said substrate (10) a particulate material (14) that is able to define said graphic sign; and
- anchoring selectively said particulate material (14) to said substrate (10), so that said particulate material (4) selectively anchored to said substrate (10) defines said graphic sign, wherein the method comprises the operations of:
- depositing said particulate material (14) on said substrate (10) in a substantially uniform way;
- removing (22) said particulate material (14) from the areas of said substrate (10) where said particulate material (14) is not fixed to said substrate (10); and
- anchoring to said substrate (10) said particulate material (14) fixed to said substrate (10), so that said particulate material (4) anchored to said substrate (10) defines said graphic sign,
wherein the method includes, before said operation of removing (22), the operation of impressing (16) selectively (18) in said substrate (10) said particulate material (14) deposited in a substantially uniform way, so that (20) where subjected to impression (16), said particulate material (14) is fixed to said substrate (10).

2. The method according to Claim 1, **characterized in that** it comprises the operation of anchoring said particulate material (14) to said substrate (10) with the application of heat and/or pressure (24)

3. The method according to any one of the preceding claims, **characterized in that** said substrate (10) is constituted by non-vulcanized material and **in that** the method comprises the operation of anchoring said particulate material (14) to said substrate (10) to obtain vulcanizing (24) of said substrate (10).

4. The method according to Claim 3, **characterized in that** said particulate material (14) is constituted by non-vulcanized material.

5. The method according to Claim 3, **characterized in that** said particulate material (14) is constituted by vulcanized material.

6. The method according to any one of the preceding claims, **characterized in that** said particulate material (14) has at least one colouring distinct from the colouring of said substrate (10).

7. The method according to Claim 4, **characterized in that** it comprises the operation of anchoring to said substrate (10) at least two particulate materials (14) with different colourings and in different areas of said substrate.

8. The method according to any one of the preceding claims, **characterized in that** it comprises the operation of anchoring to said substrate (10) particulate materials (14) of different colourings corresponding to the co-ordinates of a chromatic system.

## Patentansprüche

1. Verfahren zum Herstellen grafischer Zeichen auf einem Abdeckmaterial, **dadurch gekennzeichnet, dass** es die folgenden Schritte umfasst:
- Bereitstellen eines Substrats (10) der Abdeckung;
- Ablagern eines partikelförmigen Materials (14) auf dem Substrat (10), welches geeignet ist, um das grafische Zeichen zu definieren; und
- selektives Verankern des partikelförmigen Materials (14) an dem Substrat (10), so dass das partikelförmige Material (4), welches selektiv an dem Substrat (10) verankert ist, das grafische Zeichen definiert, wobei das Verfahren die folgenden Schritte umfasst:
- Ablagern des partikelförmigen Materials (14) auf dem Substrat (10) auf eine im Wesentlichen gleichförmige Weise;
- Entfernen (22) des partikelförmigen Materials (14) von den Bereichen des Substrats (10), wo das partikelförmige Material (14) nicht an dem Substrat (10) befestigt ist, und
- Verankern des partikelförmigen Materials (14) an dem Substrat (10), welches an dem Substrat (10) befestigt ist, so dass das partikelförmige Material (4), welches an dem Substrat (10) verankert ist, das grafische Zeichen definiert,
wobei das Verfahren vor dem Schritt des Entfernens (22) den Schritt des selektiven (18) Einpressens (16) des partikelförmigen Materials (14) in das Substrat (10), beinhaltet, welches auf eine im Wesentlichen gleichförmige Weise abgelagert wird so dass (20) das partikelförmige Material (14), dort wo es einer Einprägung (16) ausgesetzt ist, an einem Substrat (10) befestigt wird.

2. Verfahren nach Anspruch 1, **dadurch gekennzeichnet, dass** es den Schritt des Verankerns des partikelförmigen Materials (14) an dem Substrat (10) mit der Anwendung von Hitze und/oder Druck (24) umfasst.

3. Verfahren nach irgendeinem der vorhergehenden Ansprüche, **dadurch gekennzeichnet, dass** das Substrat (10) aus nicht vulkanisiertem Material besteht, und dass das Verfahren den Schritt des Verankerns des partikelförmigen Materials (14) an dem Substrat (10) umfasst, um ein Vulkanisieren (24) des Substrats (10) zu erreichen.

4. Verfahren nach Anspruch 3, **dadurch gekennzeichnet, dass** das partikelförmige Material (14) aus nicht vulkanisiertem Material besteht.

5. Verfahren nach Anspruch 3, **dadurch gekennzeichnet, dass** das partikelförmige Material (14) aus vulkanisiertem Material besteht.

6. Verfahren nach irgendeinem der vorhergehenden Ansprüche, **dadurch gekennzeichnet, dass** das partikelförmige Material (14) zumindest eine Färbung aufweist, welche unterschiedlich zu der Färbung des Substrats (10) ist.

7. Verfahren nach Anspruch 4, **dadurch gekennzeichnet, dass** es den Schritt des Verankerns an dem Substrat (10) von zumindest zwei partikelförmigen Materialien (14) mit verschiedenen Färbungen und in verschiedenen Bereichen des Substrats umfasst.

8. Verfahren nach irgendeinem der vorhergehenden Ansprüche, **dadurch gekennzeichnet, dass** es den Schritt des Verankerns an dem Substrat (10) eines partikelförmigen Materials (14) von verschiedenen Färbungen umfasst, welche den Koordinaten eines chromatischen Systems entsprechen.

## Revendications

1. Un procédé pour produire des signes graphiques sur un matériau de couverture, **caractérisé en ce qu'**il comprend les opérations de :
- mis à disposition d'un substrat (10) de ladite couverture ;
- dépôt sur ledit substrat (10) d'un matériau particulaire (14) qui est capable de définir ledit signe graphique ; et
- ancrage sélectif dudit matériau particulaire (14) sur ledit substrat (10), de sorte que ledit matériau particulaire (14) sélectivement ancré audit substrat (10) définisse ledit signe graphique, où le procédé comprend les opérations de :
- dépôt dudit matériau particulaire (14) sur ledit substrat (10) de manière substantiellement uniforme ;
- élimination (22) dudit matériau particulaire (14) des régions dudit substrat (10) où ledit matériau particulaire (14) n'est pas fixé audit substrat (10) ; et
- ancrage audit substrat (10) dudit matériau particulaire (14) fixé sur ledit substrat (10), de sorte que ledit matériau particulaire (14) ancré audit substrat (10) définisse ledit signe graphique,
où le procédé comprend, avant ladite opération d'élimination (22), l'opération d'impression (16) sélective (18) dans ledit substrat (10) dudit matériau particulaire (14) déposé d'une manière substantiellement uniforme, de sorte que (20) lorsqu'il est soumis à l'impression (16), ledit matériau particulaire (14) soit fixé audit substrat (10).

2. Le procédé selon la revendication 1, **caractérisé en ce qu'**il comprend l'opération d'ancrage dudit matériau particulaire (14) audit substrat (10) avec application de chaleur et/ou de pression (24).

3. Le procédé selon l'une des revendications précédentes, **caractérisé en ce que** le substrat (10) est constitué par un matériau non vulcanisé et **en ce que** le procédé comprend l'opération d'ancrage dudit matériau particulaire (14) audit substrat (10) pour obtenir la vulcanisation (24) dudit substrat (10).

4. Le procédé selon la revendication 3, **caractérisé en ce que** ledit matériau particulaire (14) est constitué d'un matériau non vulcanisé.

5. Le procédé selon la revendication 3, **caractérisé en ce que** ledit matériau particulaire (14) est constitué d'un matériau vulcanisé.

6. Le procédé selon l'une des revendications précédentes, **caractérisé en ce que** ledit matériau particulaire (14) possède au moins une coloration distincte de la coloration dudit substrat (10).

7. Le procédé selon la revendication 4, **caractérisé en ce qu'**il comprend l'opération d'ancrage audit substrat (10) d'au moins deux matériaux particulaires (14) avec des colorations différentes et en des régions différentes dudit substrat.

8. Le procédé selon l'une des revendications précédentes, **caractérisé en ce qu'**il comprend l'opération d'ancrage audit substrat (10) de matériaux particulaires (14) de colorations différentes correspondant aux coordonnées d'un système chromatique.
